# EUROPEAN PATENT SPECIFICATION

(11) **EP 4 625 135 B1**
(45) Date of publication and mention of the grant of the patent: **13.05.2026**
(21) Application number: 24185696.2
(22) Date of filing: 01.07.2024
(51) Int. Cl.: G06F 3/12, H04L 41/0803

(54) **INFORMATION PROCESSING SYSTEM, INFORMATION PROCESSING METHOD, AND INFORMATION PROCESSING PROGRAM**
INFORMATIONSVERARBEITUNGSSYSTEM, INFORMATIONSVERARBEITUNGSVERFAHREN UND INFORMATIONSVERARBEITUNGSPROGRAMM
SYSTÈME, PROCÉDÉ ET PROGRAMME DE TRAITEMENT D'INFORMATIONS

(30) Priority: 27.03.2024 JP 2024051278
(43) Date of publication of application: 01.10.2025
(73) Proprietor: FUJIFILM Business Innovation Corp., Minato-ku Tokyo (JP)
(72) Inventor: TAKAYAMA, Hideaki, Yokohama-shi, Kanagawa (JP)
(74) Representative: Kurig, Thomas

(56) References cited:
- EP-A1- 3 462 301
- US-A1- 2011 134 452
- US-A1- 2016 127 183

## Description

### BACKGROUND OF THE INVENTION

### (i) Field of the Invention

The present invention relates to an information processing system, an information processing method, and an information processing program.

### (ii) Description of Related Art

JP2021-193787A discloses an information processing device that, in a case where an import process is performed, generates an import result report with reference to a display resource of a setting value editing display resource database of a reference device in addition to a setting value editing display resource database of the information processing device which is an import destination device. JP2017-004332A discloses an information processing device that performs an import process or an export process according to import data or export data in which a target item has been designated, without changing the registered target item to be imported or exported.

US2016127183A1 and EP3462301A1 relate to an information processing system including a processor.

### SUMMARY OF THE INVENTION

An object of the present disclosure is to provide an information processing system, an information processing method, and an information processing program that can transmit and receive setting information in which a setting intention has been reflected even in a case where there is no setting information compatibility between an export device and an import device.

The present invention is provided in the appended claims. The following disclosure serves a better understanding of the present invention. According to a first aspect of the present
disclosure, there is provided an information processing system according to claim 1.

According to a third aspect of the present disclosure, in the information processing system according to the first or second aspect, the processor may be configured to cause the first device to read out an operation history related to the settings of the first device and to generate the command on the basis of a content of the read-out operation history.

According to a fourth aspect of the present disclosure, in the information processing system according to any one of the first to third aspects, the processor may be configured to cause the second device to perform a process of receiving the setting information including the command and to update settings of the second device on the basis of the received setting information including the command.

According to a fifth aspect of the present disclosure, in the information processing system according to any one of the first to fourth aspects, the processor may be configured to make one command selectable from a plurality of commands and include the selected command in the setting information.

According to a sixth aspect of the present disclosure, in the information processing system according to the fifth aspect, the processor may be configured to display a selection screen on which the plurality of commands are selectable.

According to a seventh aspect of the present disclosure, in the information processing system according to any one of the first to sixth aspects, the processor may be configured to, in a case where a request to output the setting information of the first device is received, generate the command according to device information related to the first device.

According to an eighth aspect of the present disclosure, in the information processing system according to the seventh aspect, the device information may be at least one of a usage situation or a hardware configuration of the first device.

According to a ninth aspect of the present disclosure, in the information processing system according to any one of the first to eighth aspects, the command may be a command indicating use permission of printing-out and external transmission, and the setting value may indicate whether or not the use permission is available.

According to a tenth aspect of the present disclosure, in the information processing system according to any one of the first to ninth aspects, the command may be a command indicating a power consumption mode transition time, and the setting value may indicate a maximum value or a minimum value.

According to an eleventh aspect of the present disclosure, there is provided an information processing method according to claim 10.

According to a twelfth aspect of the present disclosure, there is provided an information processing program according to claim 11.

According to the information processing system of the first aspect, the information processing method of the eleventh aspect, and the information processing program of the twelfth aspect of the present invention, even in a case where there is no setting information compatibility between an export device and an import device, it is possible to transmit and receive the setting information in which a setting intention has been reflected.

According to the information processing system according to the first aspect of the present invention, the first device is capable of including the command in the setting information and then outputting the setting information.

According to the information processing system of the third aspect of the present invention, the command is generated on the basis of the operation history related to the settings. Therefore, the second device is capable of receiving the setting information of the first device in which the setting intention has been reflected well.

According to the information processing system of the fourth aspect of the present invention, the second device is capable of performing setting in which the setting intention of the first device has been reflected.

According to the information processing system of the fifth aspect of the present invention, it is possible to transmit and receive the setting information in which the setting intention of a selector, such as an administrator of the device, has been reflected.

According to the information processing system of the sixth aspect of the present invention, it is possible to select a command on the selection screen.

According to the information processing system of the seventh aspect of the present invention, it is possible to transmit and receive the setting information in which the setting intention corresponding to the device has been reflected.

According to the information processing system of the eighth aspect of the present invention, it is possible to transmit and receive the setting information in which the setting intention corresponding to the usage situation of the device has been reflected.

According to the information processing system of the ninth aspect of the present invention, it is possible to transmit and receive the setting information including setting for the purpose.

According to the information processing system of the tenth aspect of the present invention, it is possible to transmit and receive the setting information including the setting for the purpose.

### BRIEF DESCRIPTION OF THE DRAWINGS

Exemplary embodiment(s) of the present invention will be described in detail based on the following figures, wherein:
Fig. 1 is a diagram illustrating a system configuration of an information processing system according to an exemplary embodiment of the technology of the present disclosure;
Fig. 2 is a block diagram illustrating a configuration of an export device according to the present exemplary embodiment;
Fig. 3 is a block diagram illustrating a configuration of an import device according to the present exemplary embodiment;
Fig. 4 is a diagram illustrating an example of a power saving mode transition time setting menu;
Fig. 5 is a diagram illustrating an example of the power saving mode transition time setting menu in a case where there is a shortcut key;
Fig. 6 is a diagram illustrating an example of individual setting of a use permission service setting menu;
Fig. 7 is a diagram illustrating an example of setting for the purpose in the use permission service setting menu;
Fig. 8 is a diagram illustrating an example of an export instruction screen using a web browser;
Fig. 9 is a diagram illustrating an example of a flowchart of an export process of the export device;
Fig. 10A is a diagram illustrating export data in a case where there is no setting menu information, and Fig. 10B is a diagram illustrating export data in a case where there is the setting menu information;
Fig. 11 is a diagram illustrating an example of an import instruction screen using the web browser;
Fig. 12 is a diagram illustrating an example of a flowchart of an import process of an import device;
Fig. 13 is a diagram illustrating an example of the export instruction screen using the web browser;
Fig. 14 is a diagram illustrating an example of the export instruction screen using the web browser; and
Fig. 15A is a diagram illustrating export data in a case where there is no setting menu information, and Fig. 15B is a diagram illustrating export data in a case where there is the setting menu information.

### DETAILED DESCRIPTION OF THE INVENTION

### <First Exemplary Embodiment>

Hereinafter, an information processing system and an information processing program according to a first exemplary embodiment of the present disclosure will be described with reference to the drawings. Components denoted by the identical reference numerals in each drawing mean the identical components. However, unless otherwise noted in the specification, for each component, the number of components is not limited to one, but a plurality of components may be present.

Further, description of duplicate configurations and reference numerals in each drawing may be omitted. In addition, the present disclosure is not limited to the following exemplary embodiments and can be implemented with appropriate modifications, such as omission of configurations, replacement with different configurations, use in combination with one exemplary embodiment and various modification examples, within the scope of the purpose of the present disclosure.

### <Information Processing System>

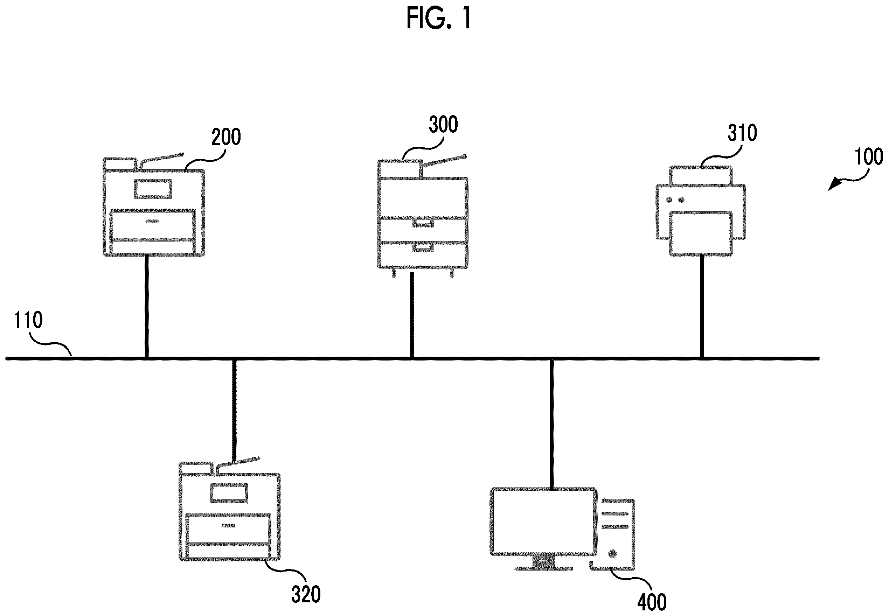

Fig. 1 is a diagram illustrating a system configuration of an information processing system 100 according to an exemplary embodiment of the present disclosure. As illustrated in Fig. 1, the information processing system 100 according to the present exemplary embodiment includes an export device 200 as an example of a first device, three import devices 300, 310, and 320 as an example of a second device, and a personal computer (PC) 400. The export device 200, the three import devices 300, 310, and 320, and the PC 400 are connected to one another by a local network 110.

In the present exemplary embodiment, the export device 200 and the three import devices 300, 310, and 320 are, for example, devices that are called multifunction machines having a plurality of functions such as a print function, a scanning function, a copy function, and a facsimile function. In the present exemplary embodiment, for example, the export device 200 and the three import devices 300, 310, and 320 have different parameter configurations or different ranges of setting values. For example, these devices are not the identical model or have different optional configurations.

In the present exemplary embodiment, as described above, in the export or import of setting information between the devices having different parameter configurations or different ranges of setting values, it is possible to transmit and receive the setting information, in which a setting intention has been reflected, even in a case where there is no setting information compatibility between the export device 200 and the import devices 300, 310, and 320.

### <PC>

The PC 400 in the information processing system 100 according to the present exemplary embodiment is a terminal that is operated by an administrator of the information processing system 100 and is a personal computer of known technology. In a case where export or import is performed between the export device 200 to be managed and at least one of the three import devices 300, 310, and 320 to be managed, the PC 400 issues various instructions through a user interface (UI) displayed on a screen of the PC 400. In addition, specific instructions will be described in detail below.

### <Export Device>

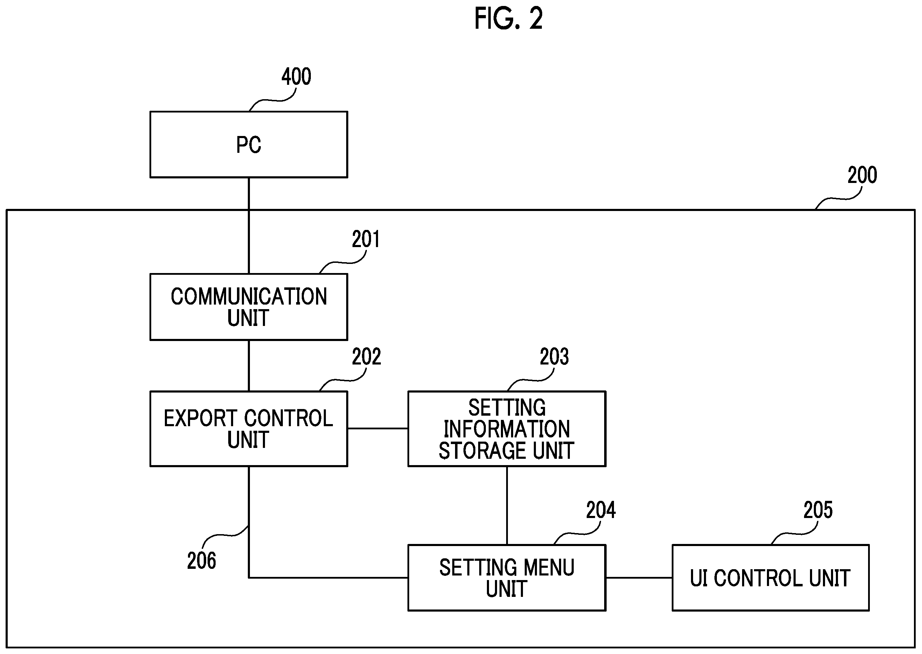

Next, the export device 200 in the information processing system 100 according to the present exemplary embodiment will be described in detail. The export device 200 is a device that is called a multifunction machine having a plurality of functions such as a print function, a scanning function, a copy function, and a facsimile function. Fig. 2 is a block diagram illustrating a configuration of the export device 200 according to the present exemplary embodiment.

As illustrated in Fig. 2, the export device 200 includes a communication unit 201, an export control unit 202, a setting information storage unit 203, a setting menu unit 204, and a UI control unit 205. These functional configurations are connected through a control bus 206.

The communication unit 201 is a configuration unit for communicating with another device such as the PC 400. Specifically, the communication unit 201 communicates with other devices using communication means such as a wired means, a wireless means, the Internet, an intranet, and a public line such as a telephone line. In addition, the communication means may be communication means using voice, light, vibration, images, and the like. In the present exemplary embodiment, for example, the communication unit 201 communicates with the PC 400 to transmit received data to the export control unit 202.

The export control unit 202 receives the received data transmitted from the communication unit 201. Here, in a case where the received data is an export information request, export information which is information required to generate an export instruction and which will be described below is transmitted to the PC 400 through the communication unit 201. On the other hand, in a case where the received data is the export instruction, export data including the setting information is generated from information stored in the setting information storage unit 203 and is transmitted to the PC 400 through the communication unit 201. In a case where the export data is generated, the export control unit 202 can also receive setting menu information from the setting menu unit 204. Further, the setting menu information will be described in detail below.

The setting information storage unit 203 stores the setting information of the export device 200. Here, the stored setting information is information of the user's instruction received through the UI control unit 205 or the setting menu unit 204. In addition, the setting information may be information received through the export control unit 202. The setting information is information such as setting values of various parameters set in the export device 200. Further, the setting information stored in the setting information storage unit 203 can be appropriately read out and rewritten.

The setting menu unit 204 stores the setting menu information that will be described below and provides the stored setting menu information on the basis of a setting menu information acquisition request from the export control unit 202 and the UI control unit 205. In addition, the setting menu unit 204 receives the user's instruction through the UI control unit 205 and instructs the setting information storage unit 203 to read out or rewrite the setting information.

The UI control unit 205 controls the input and output of user interface hardware (hereinafter, referred to as UI H/W) that is configured by a liquid crystal display (LCD), a light-emitting diode (LED), a speaker, various keys, a touch panel, or the like. In the present exemplary embodiment, the UI control unit 205 provides the instruction from the user via the UI H/W to the setting menu unit 204.

### <Import Device>

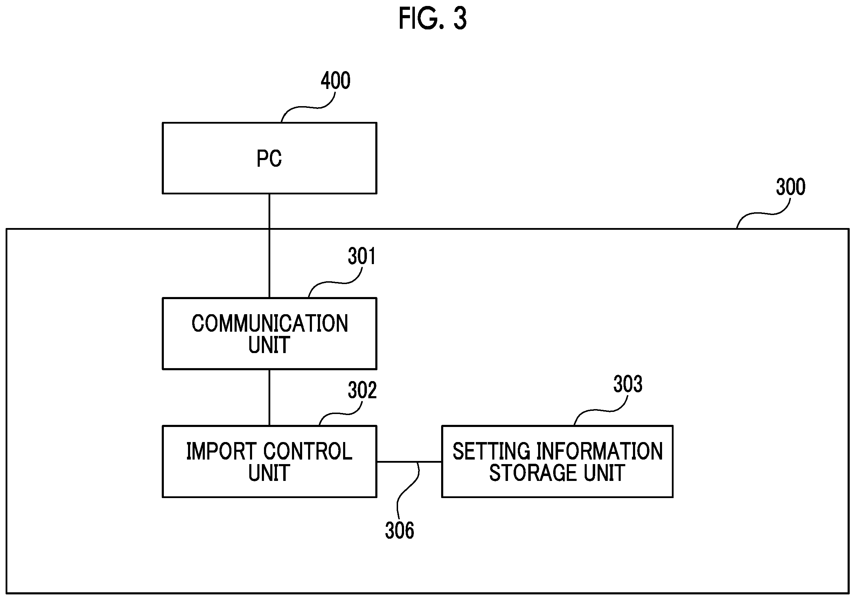

Next, the import devices 300, 310, and 320 in the information processing system 100 according to the present exemplary embodiment will be described in detail. The import devices 300, 310, and 320 are devices that are called multifunction machines having a plurality of functions such as a print function, a scanning function, a copy function, and a facsimile function. In addition, in the following description, the operation of the import device 300 will be mainly described, but the import devices 310 and 320 have a configuration identical to the configuration of the import device 300. Fig. 3 is a block diagram illustrating the configuration of the import device 300 according to the present exemplary embodiment.

As illustrated in Fig. 3, the import device 300 includes a communication unit 301, an import control unit 302, and a setting information storage unit 303. These functional configurations are connected through a control bus 306.

The communication unit 301 is a configuration unit for communicating with another device such as the PC 400. Specifically, the communication unit 301 communicates with other devices using communication means such as a wired means, a wireless means, the Internet, an intranet, and a public line such as a telephone line. In addition, the communication means may be communication means using voice, light, vibration, images, and the like. In the present exemplary embodiment, for example, the communication unit 301 communicates with the PC 400 to transmit received data to the import control unit 302.

The import control unit 302 receives the received data transmitted from the communication unit 301. Here, in a case where the received data is an import information request, import information which is information required to generate an import instruction and which will be described below is transmitted to the PC 400 through the communication unit 301. On the other hand, in a case where the received data is the import instruction, the export data is received through the communication unit 301 and is stored in the setting information storage unit 303.

The setting information storage unit 303 stores the setting information of the import device 300. Here, the stored setting information is information of the user's instruction and the export data received through the import control unit 302. The setting information is information such as setting values of various parameters set in the import device 300. Further, the setting information stored in the setting information storage unit 303 can be appropriately read out and rewritten.

In addition, in the present exemplary embodiment, the import device 300 includes configurations corresponding to the setting menu unit 204 and the UI control unit 205 in the export device 200, which is not illustrated.

### <Setting Method>

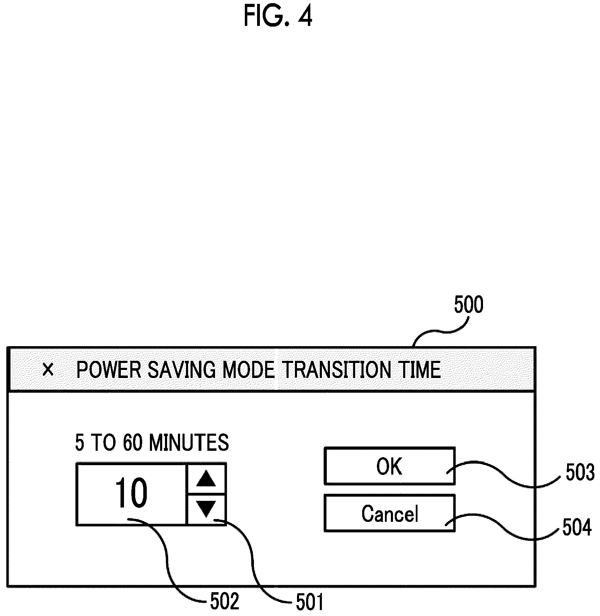

Next, various settings of the export device 200 and the import devices 300, 310, and 320 will be described. First, a method for setting a power saving mode transition time will be described. Fig. 4 is a diagram illustrating an example of a power saving mode transition time setting menu.

In the export device 200 and the import devices 300, 310, and 320, a menu 500 for setting the power saving mode transition time is displayed on a display screen (not illustrated) as illustrated in Fig. 4. Here, a power saving mode corresponds to a power consumption mode, is a function of saving the power consumption of the device, and is a mode that is switched in a case where the device is not used for a predetermined period of time. The power saving mode transition time is a period from the time when it is determined that the device is not used to the time when the mode is switched to the power saving mode. In addition, in the present exemplary embodiment, for example, in the device in which the configuration of the menu 500 is displayed, the power saving mode transition time can be set in a range of 5 minutes or more and 60 minutes or less. Further, the settable range of the power saving mode transition time may be different between a plurality of devices or may be identical between some devices.

In the configuration of the menu 500, in a case where the administrator of the device sets the power saving mode transition time, the administrator operates a spin button 501. Then, for example, a desired time, such as "10", is displayed in a frame 502 adjacent to the spin button 501. In a case where the administrator of the device touches, that is, selects an OK button 503 after the desired time is displayed, the power saving mode is set to the desired time displayed in the frame 502. In addition, in a case where the administrator of the device touches a Cancel button 504 displayed below the OK button 503, for example, the desired time is canceled, and the current set time is displayed in the frame 502. Further, a configuration may be adopted in which the administrator touches the Cancel button 504 to change the screen to a home screen.

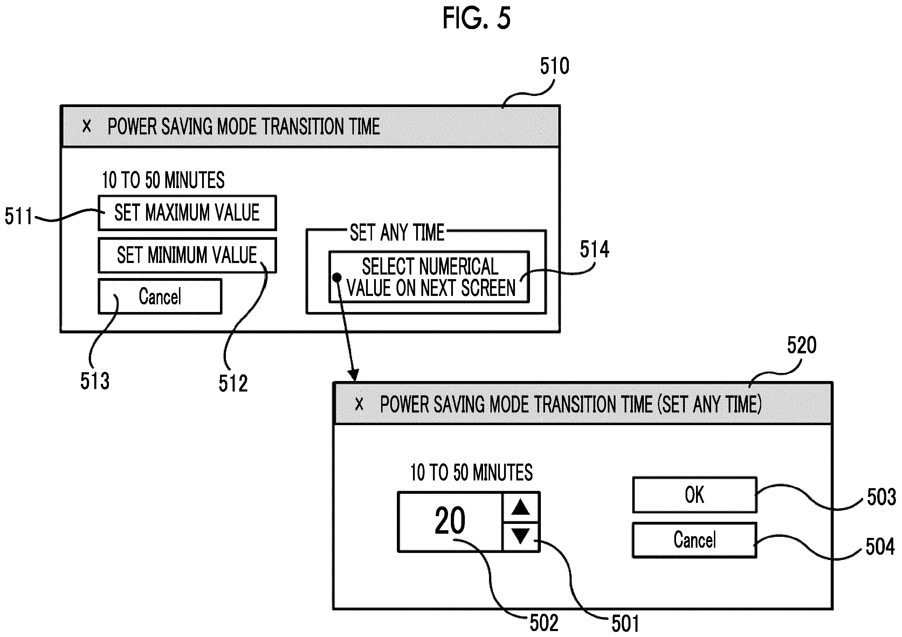

Here, in a case where the administrator of the device wants to set "60 minutes" which is the maximum value that can be supported by the device as the power saving mode transition time, the administrator needs to repeatedly operate the spin button 501. Therefore, there is a configuration in which a shortcut key for setting the minimum value and the maximum value is provided in order to reduce the complexity of the operation. Fig. 5 is a diagram illustrating an example of the power saving mode transition time setting menu in a case where there is a shortcut key.

In the export device 200 and the import devices 300, 310, and 320, as illustrated in Fig. 5, a menu 510 and a menu 520 for setting the power saving mode transition time are displayed on the display screen (not illustrated). In addition, in the present exemplary embodiment, for example, in the device in which the configurations of the menu 510 and the menu 520 are displayed, the power saving mode transition time can be set in a range of 10 minutes or more and 50 minutes or less, and the settable range of the power saving mode transition time is different from the settable range in the device in which the configuration of the menu 500 is displayed.

In the configuration of the menu 510, in a case where the administrator of the device sets "50 minutes" which is the maximum value that can be supported by the device as the power saving mode transition time, the administrator may only touch a "Set maximum value" key 511. In addition, in the configuration of the menu 510, in a case where the administrator of the device sets "10 minutes" which is the minimum value that can be supported by the device as the power saving mode transition time, the administrator may only touch a "Set minimum value" key 512. Further, in a case where the administrator of the device touches a Cancel button 513, for example, the current set time is set.

On the other hand, in a case where the administrator of the device wants to set any time, the administrator touches a "Select numerical value on the next screen" key 514 to display the menu 520. In addition, since a setting method in the configuration of the menu 520 is identical to the setting method in the configuration of the menu 500, the description thereof will not be repeated here.

As described above, the UI configurations are independent of each other in a case where the power saving mode transition time is set. Therefore, only information that indicates a value indicating the power saving mode transition time is the setting information, regardless of the configuration of the menu 500 illustrated in Fig. 4 or the configurations of the menus 510 and 520 illustrated in Fig. 5.

Next, a setting method for setting a use permission service will be described. The following Table 1 shows a configuration of setting information in the device in which the use permission service can be set. Here, the use permission service indicates a service that is permitted to be used in the device in which the availability of each of print, copy, and scanning services can be set. Further, in the present exemplary embodiment, for example, the use permission service can be set in any of the export device 200 or the import devices 300, 310, and 320.

**[Table 1]**

| Setting information name | Range |
|---|---|
| Print service availability | Available, Unavailable |
| Copy service availability | Available, Unavailable |
| Scanning service availability | Available, Unavailable |

As illustrated in Table 1, the range of any of print service availability, copy service availability, or scanning service availability which is a setting information name is "available" and "unavailable". In the present exemplary embodiment, the setting information illustrated in Table 1 is stored in the setting information storage unit 203 of the export device 200 and the setting information storage unit 303 of the import device 300. In addition, the range of each setting information item is stored in a state in which the range is set to "available" or "unavailable".

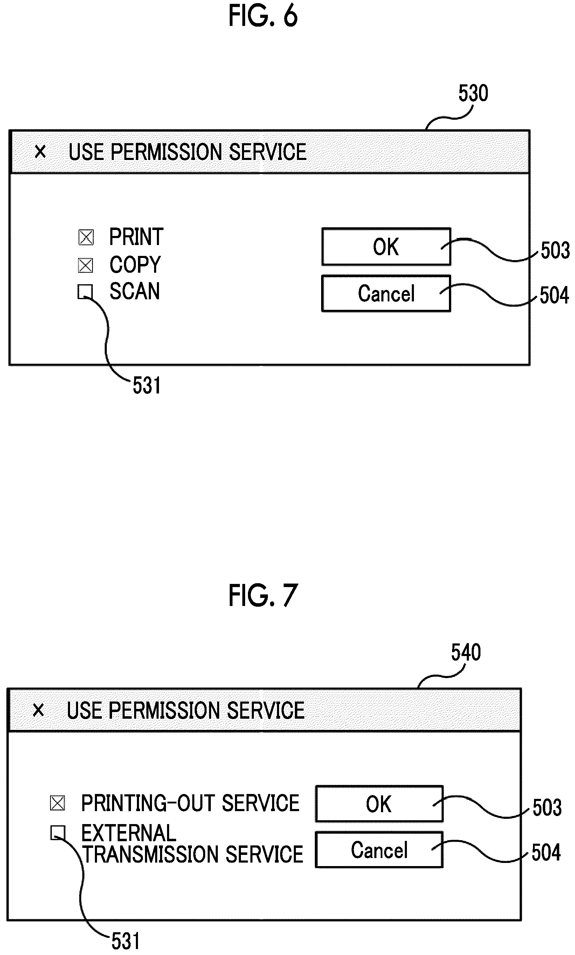

As an example of a means for setting the use permission service as described above, there is a method in which the administrator of the device can individually set the availability of a desired service. Fig. 6 is a diagram illustrating an example of individual setting of a use permission service setting menu.

In the export device 200 and the import devices 300, 310, and 320, as illustrated in Fig. 6, a menu 530 for individually setting the use permission service is displayed on the display screen (not illustrated).

In the configuration of the menu 530, in a case where the administrator of the device sets the use permission service, the administrator checks a check box 531 displayed on the left side of each of "print", "copy", and "scanning" which are service names to set the service that is permitted to be used. Further, the administrator touches the inside of the check box 531 to check the check box 531. In addition, the administrator touches the inside of the checked check box 531 to uncheck the check box 531. In Fig. 6, the check boxes 531 corresponding to "print" and "copy" are checked. In other words, since "print" and "copy" are selected, "print" and "copy" are services that are permitted to be used.

As described above, in a case where the administrator of the device touches the OK button 503 in a state in which the service that is permitted to be used is selected, the services corresponding to the checked check boxes 531, that is, "print" and "copy" are set as the use permission service. In addition, in a case where the administrator of the device touches the Cancel button 504 displayed below the OK button 503, for example, the check box 531 is unchecked.

For the above-described individual setting, there is a setting method in which the administrator of the device sets the use permission service for the purpose to indirectly performing setting. Fig. 7 is a diagram illustrating an example of the setting for the purpose in the use permission service setting menu.

In the export device 200 and the import devices 300, 310, and 320, as illustrated in Fig. 7, a menu 540 for setting the use permission service for the purpose is displayed on the display screen (not illustrated).

In the configuration of the menu 540, in a case where the administrator of the device sets the use permission service, it is possible to select a "printing-out service" and an "external transmission service". Specifically, in a case where the administrator checks the check box 531 displayed on the left side of each of the "printing-out service" and the "external transmission service", the service to be permitted to be used is set. In Fig. 7, the check box 531 corresponding to the "printing-out service" is checked. In other words, since the "printing-out service" is selected, the "printing-out service" is the service that is permitted to be used.

In addition, in the configuration of the menu 540 illustrated in Fig. 7, similarly to the configuration of the menu 530 illustrated in Fig. 6, in a case where the administrator of the device touches the OK button 503 in a state in which the service to be permitted to be used is selected, the service corresponding to the checked check box 531 is set as the use permission service. Further, in a case where the administrator of the device touches the Cancel button 504, for example, the check box 531 is unchecked.

In the configuration of the menu 540 illustrated in Fig. 7, in a case where the administrator of the device has a purpose of "permitting printing-out, but prohibiting external transmission" in consideration of an information leakage risk of an installation environment of the device, the administrator can make a selection corresponding to the purpose to perform the setting of the prohibition of a scanning service which is a service of indirectly performing external transmission.

As described above, the UI configurations are independent of each other in a case where the use permission service is set. Therefore, only the information indicating "available" or "unavailable" in various use permission services is the setting information, regardless of the configuration of the menu 530 illustrated in Fig. 6 or the configuration of the menu 540 illustrated in Fig. 7.

### <Export Process>

Next, a process of exporting the setting information in the export device 200 will be described.

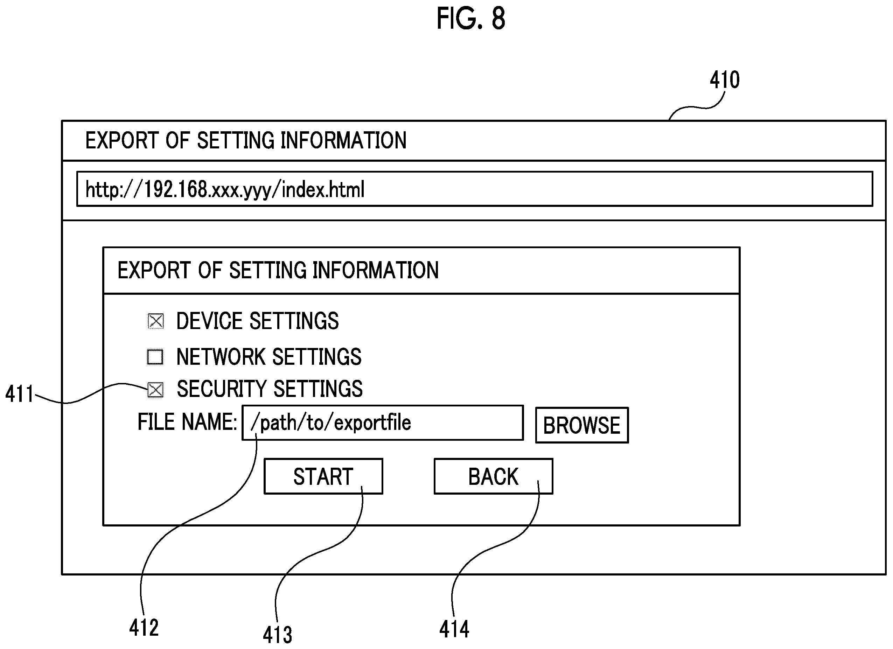

Fig. 8 is a diagram illustrating an example of an export instruction screen 410 using a web browser. In the present exemplary embodiment, for example, the administrator of the device operates the PC 400 to connect to the export device 200 and inputs an instruction to display the export instruction screen 410 illustrated in Fig. 8 on the display screen (not illustrated) of the PC 400. In addition, in this case, as illustrated in Fig. 8, general-purpose software, such as a web browser, or dedicated connection software may be used as a means for connection.

As illustrated in Fig. 8, in a case where the web browser is used, the web browser provided in the PC 400 first transmits an export information request to the export device 200 and receives the export information which is information required to generate the export instruction from the export device 200 in response to the export information request. Here, the "export information" is, for example, information required to display the export instruction screen 410 illustrated in Fig. 8 and is, for example, information, such as a category of the setting information, and information, such as setting values of various parameters currently set in the export device 200.

Then, the web browser provided in the PC 400 performs display for generating an export request on a web browser screen. The administrator of the device operates the screen to check check boxes 411 of "device settings", "network settings", and "security settings" which are setting information categories to be exported, inputs a file name to be saved in a text box 412, and then touches a start button 413 to transmit the export instruction to the export device 200. Further, in a case where a back button 414 is touched, the screen returns to the previous web browser screen.

Furthermore, in the present disclosure, since the selection of the setting information category is not a necessary configuration requirement, a further description thereof will be omitted.

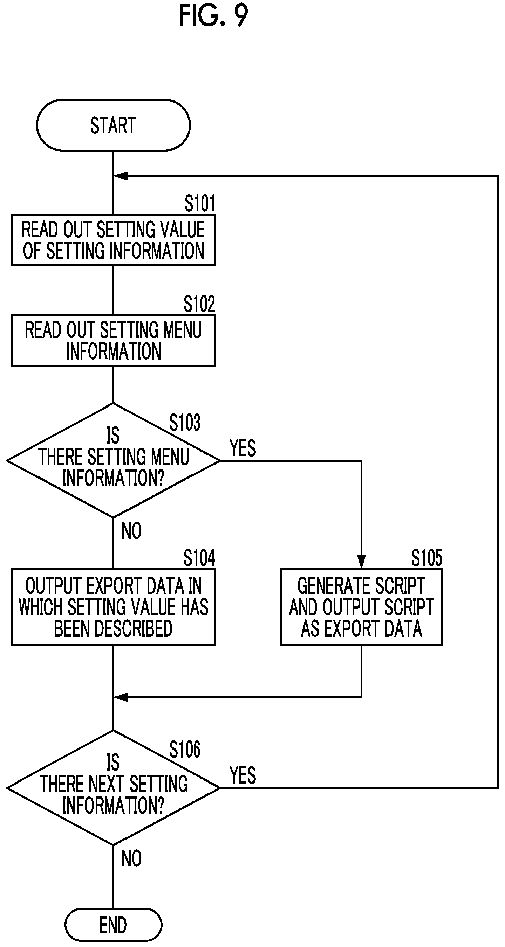

Next, an export process of the export device 200 that has received the export instruction will be described. Fig. 9 is a diagram illustrating an example of a flowchart of the export process of the export device 200.

In Step S101, the export control unit 202 reads out the setting values from the setting information stored in the setting information storage unit 203. Here, specifically, the setting information is information indicating a list of parameters in the export device 200. In a case of the setting information of the use permission service, the "setting value" is, for example, information indicating the range, that is, "available" or "unavailable" set for each of the setting information names, such as print service availability, copy service availability, and scanning service availability, as illustrated in Table 1.

In addition, in a case of the power saving mode transition time, the "setting value" is, for example, information indicating the value of the power saving mode transition time and is information indicating a set time such as "50 minutes". Further, in a case where a plurality of setting information items are exported, the setting values of the setting information items are read out in a predetermined order.

Then, in Step S102, the export control unit 202 receives the setting menu information of the setting information read out in Step S101 from the setting menu unit 204. Here, the "setting menu information" is information for supplementing what intention the setting value read out in Step S101 is set with. For example, in a case where the read-out setting value is the power saving mode transition time, the "setting menu information" is information indicating the value set by touching the "Set maximum value" key 511 or the "Set minimum value" key 512 which is a shortcut key for setting the maximum value or the minimum value in the menu 510 illustrated in Fig. 5.

In addition, for example, in a case where the read-out setting value is the availability or unavailability of the use permission service, the "setting menu information" is information indicating the value set by the menu 540 for performing the setting for the purpose illustrated in Fig. 7.

In the present exemplary embodiment, for example, an operation history related to the setting of the setting values is stored in the setting menu unit 204. The operation history stored in the setting menu unit 204 is read out to determine how the setting values are set. That is, the setting menu unit 204 can determine, from the operation history, whether the read-out setting value is a qualitative value set by the "Set maximum value" key 511 or the "Set minimum value" key 512 or a quantitative value set as any time. In addition, the setting menu unit 204 can determine, from the operation history, whether the read-out setting value is the value set by the menu 530 for performing the individual setting or the value set by the menu 540 for performing the setting for the purpose. The export control unit 202 receives, as the setting menu information, information indicating what intention the setting value is set with.

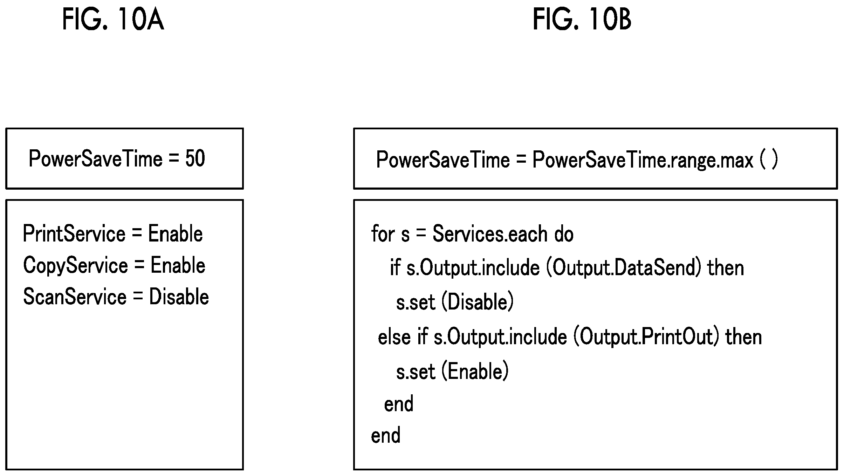

In a case where the setting menu information is not read out, that is, in a case where there is no setting menu information in Step S103 (Step S103; NO), in Step S104, the export control unit 202 outputs the export data, in which the setting information names and the setting values read out in Step S101 have been directly described as illustrated in Fig. 10A, to the communication unit 201.

That is, in the export data, "PowerSaveTime = 50" indicates that the power saving mode transition time is 50 minutes. In addition, "PrintService=Enable" indicates that the print service is available, and "CopyService=Enable" indicates that the copy service is available. Further, "ScanService=Disable" indicates that the scanning service is not available.

On the other hand, in a case where the setting menu information is read out, that is, in a case where there is the setting menu information in Step S103 (Step S103; YES), in Step S105, the export control unit 202 generates a script on the basis of the setting information read out in Step S101 and the setting menu information corresponding to the setting information read out in Step S102 as illustrated in Fig. 10B and outputs the script as the export data.

The script illustrated in Fig. 10B is generated, for example, in a case where the setting menu unit 204 reads out the operation history of touching the "Set maximum value" key 511 illustrated in Fig. 5 during the setting of the power saving mode transition time. That is, "PowerSaveTime.range.max()" indicates that the power saving mode transition time is the maximum value.

In addition, the script illustrated in Fig. 10B is generated, for example, in a case where the setting menu unit 204 reads out the operation history of operating the menu 540 for performing the setting for the purpose illustrated in Fig. 7 during the setting of the use permission service. That is, "for s=Services.each do if s.Output.include(Output.DataSend) then s.set(Disable) else if s.Output.include(Output.PrintOut) then s.set(Enable) end end" indicates that the external transmission service is not available, but the printing-out service is available.

That is, in the present exemplary embodiment, for example, the setting information is included in the export data, and examples of the export data include data in which the setting information name and the setting value have directly been described as illustrated in Fig. 10A and data including the "script" generated as described above as illustrated in Fig. 10B. As described above, in the present exemplary embodiment, the setting intention is expressed in the "script".

Then, in Step S106, the export control unit 202 determines whether or not there is the next setting information. In a case where there is the next setting information (Step S106; YES), the process proceeds to Step S101, and the process in and after Step S101 is repeated. On the other hand, in a case where there is no next setting information in Step S106 (Step S106; NO), the export control unit 202 ends the export process.

Further, in the flowchart illustrated in Fig. 9, in a case where there are a plurality of setting information items, the output of the export data by the processes in Steps S104 and S105 may be immediately performed for each setting information item or may be performed for the plurality of setting information items at a time.

### <Import Process>

A process of importing the setting information in the import device 300 will be described. In addition, hereinafter, the import device 300 will be described as an example. However, the process of importing the setting information can be similarly performed for the import devices 310 and 320.

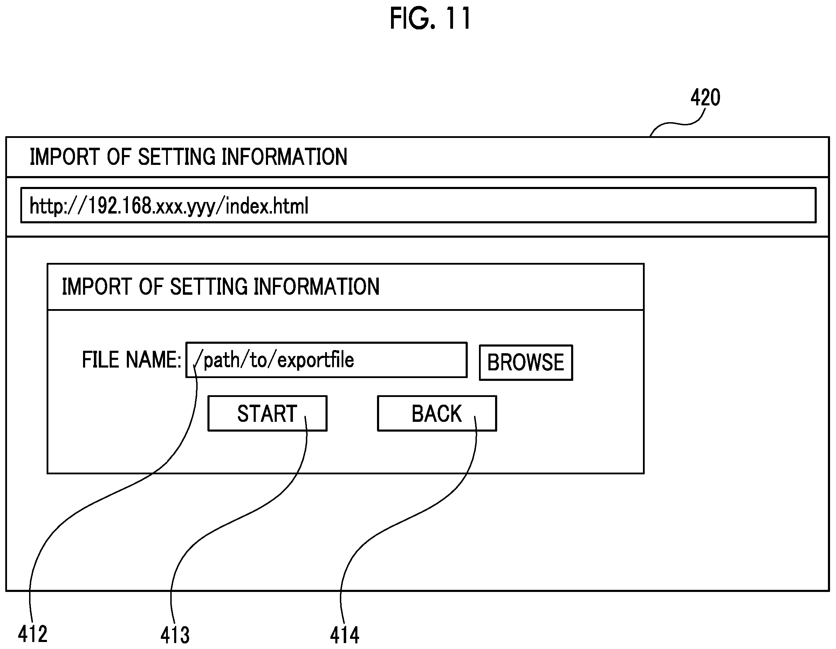

Fig. 11 is a diagram illustrating an example of an import instruction screen using a web browser. In the present exemplary embodiment, for example, the administrator of the device operates the PC 400 to connect to the import device 300 and inputs an instruction to display an import instruction screen 420 illustrated in Fig. 11 on the display screen (not illustrated) of the PC 400. In addition, in this case, a means that is identical to the means used at the time of the export instruction can be used as the means used for connection.

As illustrated in Fig. 11, in a case where the web browser is used, the web browser provided in the PC 400 first transmits an import information request to the import device 300 and receives, from the import device 300, import information which is information required to generate the import instruction as a response to the import information request. Here, the "import information" is, for example, information required to display the import instruction screen 420 illustrated in Fig. 11.

Then, the web browser provided in the PC 400 performs display for generating an export request on a web browser screen. The administrator of the device operates this screen to input the name of the previously saved export file to be imported to a text box 412 and then touches a start button 413 to transmit the import instruction to the import device 300. Further, in a case where a back button 414 is touched, the screen returns to the previous web browser screen.

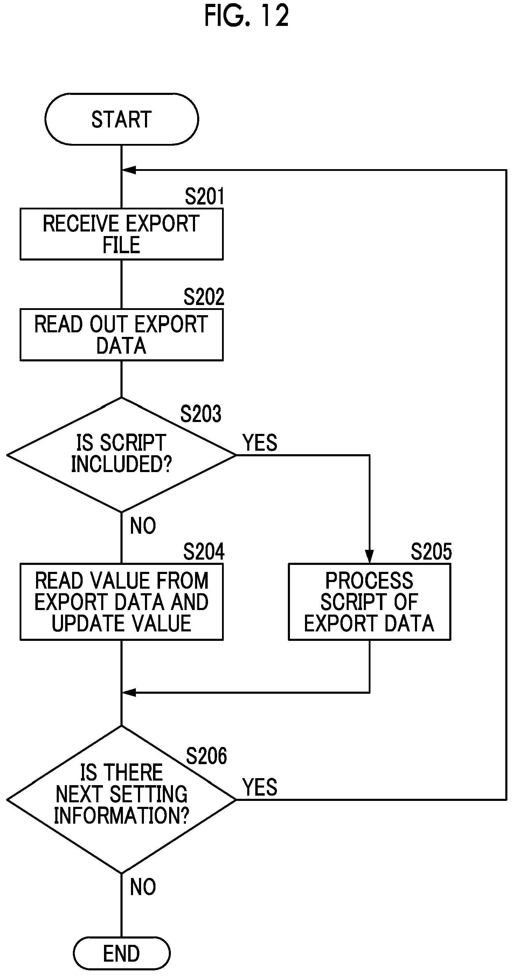

Next, an import process of the import device 300 that has received the import instruction will be described. Fig. 12 is a diagram illustrating an example of a flowchart of the import process of the import device 300. In the present exemplary embodiment, for example, the import device 300 is a different model having a difference in function from the export device 200 as illustrated in the following Table 2.

**[Table 2]**

| Setting information name | Export device | Import device |
|---|---|---|
| Power saving mode transition time | Range: 1 to 50 minutes, Current setting value: 50 minutes | Range: 5 to 60 minutes, Current setting value: 10 minutes |
| Print service availability | Available | Available |
| Copy service availability | Available | Available |
| Scanning service availability | Unavailable | Available |
| FAX service availability | | Available |

In Step S201, the import control unit 302 receives an export file having a plurality of export data items via the communication unit 301. In addition, in the subsequent steps, the export data of the received export file is processed. For example, after the entire export file is stored in a work memory of the import device 300 in Step S201, the process in the subsequent steps may be started. Alternatively, the process in the subsequent steps may be started each time each export data item is received.

Then, the import control unit 302 reads out the export data from the received export file in Step S202 and determines whether or not the read-out export data includes the script in Step S203. In a case where the export data does not include the script in Step S203 (Step S203; NO), in Step S204, the import control unit 302 updates the setting value of the setting information stored in the setting information storage unit 303 according to the read-out setting value illustrated in Fig. 10A.

Specifically, as illustrated in the following Table 3, the setting value of the power saving mode transition time is 10 minutes before the import, but is 50 minutes after the import. In addition, the print service availability and the copy service availability do not change before and after the import and remain "available", and the scanning service availability is "available" before the import and is "unavailable" after the import. Further, in the export device 200, since there is no setting value for the FAX service availability, the FAX service availability does not change before and after the import and remains "available".

**[Table 3]**

| Setting information name | Range | Setting value before import | Setting value after import |
|---|---|---|---|
| Power saving mode transition time | 5 to 60 minutes | 10 minutes | 50 minutes |
| Print service availability | Available, Unavailable | Available | Available |
| Copy service availability | Available, Unavailable | Available | Available |
| Scanning service availability | Available, Unavailable | Available | Unavailable |
| FAX service availability | Available, Unavailable | Available | Available (No change) |

On the other hand, in a case where the export data includes the script in Step S203 (Step S203; YES), in Step S205, the import control unit 302 processes the read-out script illustrated in Fig. 10B to update the setting values of the setting information stored in the setting information storage unit 303.

Specifically, as illustrated in the following Table 4, the setting value of the power saving mode transition time is 10 minutes before the import, but is 60 minutes, which is the maximum value of the range of the import device 300, after the import since the script includes a command indicating the power saving mode transition time and there is an instruction to set the setting value to the maximum value.

In addition, in the script, there is an instruction for the use permission service such that the external transmission service is unavailable, but the printing-out service is available. Therefore, as illustrated in the following Table 4, the print service availability and the copy service availability, which are the printing-out services, do not change before and after the import and remain "available". On the other hand, the scanning service availability and the FAX service availability, which are the external transmission services, are "available" before the import, but are "unavailable" after the import.

**[Table 4]**

| Setting information name | Range | Setting value before import | Setting value after import |
|---|---|---|---|
| Power saving mode transition time | 5 to 60 minutes | 10 minutes | 60 minutes |
| Print service availability | Available, Unavailable | Available | Available |
| Copy service availability | Available, Unavailable | Available | Available |
| Scanning service availability | Available, Unavailable | Available | Unavailable |
| FAX service availability | Available, Unavailable | Available | Unavailable |

That is, in the export device 200, there is no setting value for the FAX service availability. Therefore, as illustrated in Table 3, in a case where the script is not included, the FAX service availability does not change before and after the import and remains "available". On the other hand, in a case where the export data including the script generated in the export device 200 is received, since information indicating that "the external transmission service is not available" is included in the export data, the FAX service is unavailable.

In the present exemplary embodiment, the above-described "script" corresponds to a "command" in which the setting value is changed depending on the conditions applied to the export device 200. For example, the script illustrated in Fig. 10B includes a command to set the power saving mode transition time to the maximum value and a command to make the external transmission service unavailable and to make the printing-out service available. That is, as illustrated in Table 2, for example, in a case where the range of the power saving mode transition time is "1 to 50 minutes" in the export device 200 and is "5 to 60 minutes" in the import device 300, the maximum value is 50 minutes in the export device 200 and is 60 minutes in the import device 300. That is, as described above, in a case where the command to set the power saving mode transition time included in the "script" to the maximum value is processed, the setting value is 50 minutes in the export device 200, but is 60 minutes in the import device 300. That is, the setting value is changed.

In addition, in a case where the command to make the external transmission service included in the "script" unavailable and to make the printing-out service available is processed as described above, the print service availability and the copy service availability are "available", and the scanning service availability is "unavailable" in the export device 200. On the other hand, in the import device 300, the print service availability and the copy service availability are "available", and the scanning service availability and the FAX service availability are "unavailable". That is, in the export device 200, there is no setting value for the FAX service availability. Therefore, in a case where there is no "script", the FAX service availability remains "available" which is the current setting value in the import device 300. However, in a case where there is a "script", the setting value is changed from "available" to "unavailable".

Then, in Step S206, the import control unit 302 determines whether or not there is the next setting information. In a case where there is the next setting information (Step S206; YES), the process proceeds to Step S202. Then, the process after Step S202 is repeated. On the other hand, in a case where there is no next setting information in Step S206 (Step S206; NO), the import control unit 302 ends the import process.

### <Operation and Effects>

In the information processing system 100 according to the present exemplary embodiment, the setting information that is input to the import device 300 in order to reflect the settings of the export device 200 in the import device 300 includes the "script" as a command in which the setting value is changed depending on the conditions applied to the export device 200. Therefore, for example, in a case where the command to set the power saving mode transition time to the maximum value and the command to make the external transmission service unavailable and to make the printing-out service available are included in the "script", it is possible to set the power saving mode transition time to 60 minutes, which is the maximum value of the import device 300, in the import device 300 instead of 50 minutes which is the maximum value of the export device 200 as described above. **In** addition, there is no setting value for the FAX service availability in the export device 200, but the FAX service availability can be updated from "available" to "unavailable" in the import device 300. As described above, even in a case where there is no setting information compatibility between the export device 200 and the import device 300, it is possible to transmit and receive the setting information in which the setting intention has been reflected.

In addition, in the information processing system 100 according to the present exemplary embodiment, the export device 200 performs the process of outputting, as the export data, the setting information including the "script" as a command. Therefore, the export device 200 can include the "script" in the setting information and then output the setting information as the export data.

Further, in the information processing system 100 according to the present exemplary embodiment, the export device 200 reads out the operation history related to the settings of the export device 200 and generates the "script" on the basis of the content of the read-out operation history. Therefore, since the "script" is generated on the basis of the operation history related to the settings, the import device 300 can receive the setting information of the export device 200 in which the setting intention has been reflected well. In addition, since the operation history is stored in the export device 200, the operation history may not be output to the outside.

Further, in the information processing system 100 according to the present exemplary embodiment, the import device 300 performs the process of receiving the export data, which is the setting information including the "script", and updates the settings of the import device 300 on the basis of the received export data. Therefore, the import device 300 can perform setting in which the setting intention of the export device 200 has been reflected.

Furthermore, in the information processing system 100 according to the present exemplary embodiment, the "script" as a command includes a command indicating the use permission of printing-out and external transmission, and the setting value indicates the availability or unavailability of the use permission. Therefore, since the "script" includes the setting for the purpose, it is possible to transmit and receive the setting information including the setting for the purpose.

Moreover, in the information processing system 100 according to the present exemplary embodiment, the "script" as a command is a command indicating the power saving mode transition time, which is the transition time of the power consumption mode, and the setting value indicates the maximum value or the minimum value. Therefore, since the "script" includes the setting for the purpose, it is possible to transmit and receive the setting information including the setting for the purpose.

### <Second Exemplary Embodiment>

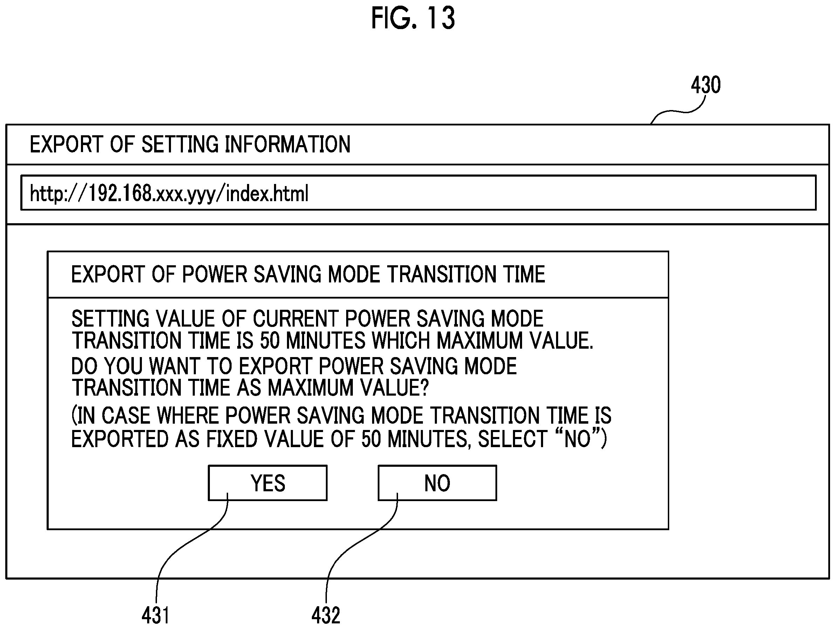

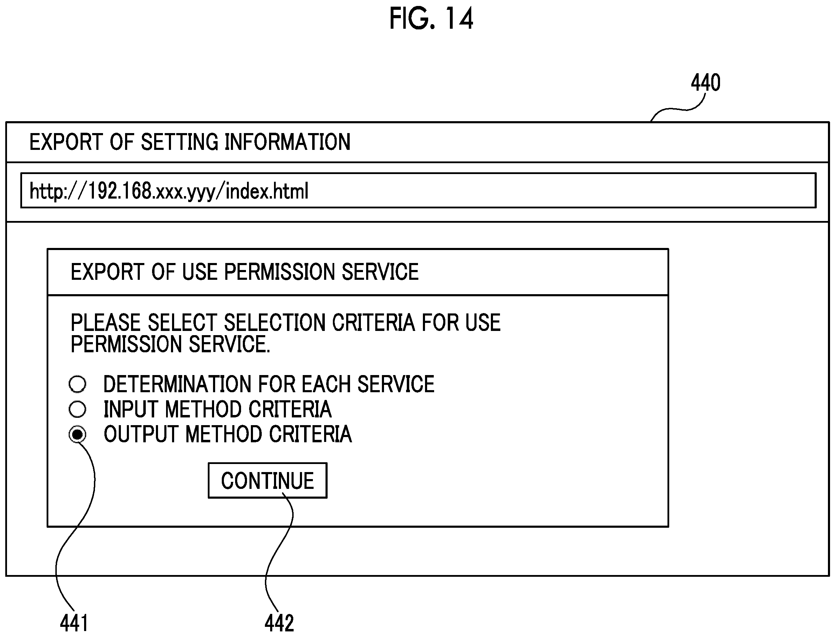

Hereinafter, an information processing system and an information processing program according to a second exemplary embodiment of the present disclosure will be described with reference to the drawings. In the first exemplary embodiment, the setting menu information is acquired from the operation history in the menu configuration of the export device 200. However, in the present exemplary embodiment, a configuration may be adopted in which the administrator (operator) of the device inputs the setting menu information during export. Figs. 13 and 14 are diagrams illustrating examples of an export instruction screen using a web browser.

For example, in the first exemplary embodiment, after the start button 413 illustrated in Fig. 8 is touched, an export instruction screen 430 illustrated in Fig. 13 is displayed on the display screen (not illustrated) in order to export the power saving mode transition time. In Fig. 13, a message "The setting value of the current power saving mode transition time is 50 minutes which is the maximum value. Do you want to export the power saving mode transition time as the maximum value? (In a case where the power saving mode transition time is exported as a fixed value of 50 minutes, select "No")" is displayed on the export instruction screen 430. In addition, as described above, the setting values of various parameters currently set in the export device 200 are received as a response to the export information request by the web browser provided in the PC 400 from the export device 200. Therefore, it is possible to perform the above-described display.

Then, in a case where a "Yes" button 431 is touched on the export instruction screen 430 illustrated in Fig. 13, the setting value is exported as a qualitative maximum value. In a case where a "No" button 432 is touched, the setting value is exported as a quantitative value of 50 minutes. Then, for example, the data exported by touching the "Yes" button 431 is stored as the setting menu information in the setting menu unit 204 of the export device 200.

That is, on the export instruction screen 430 illustrated in Fig. 13, the operation of touching the "Yes" button 431 and the operation of touching the "No" button 432 are operations that affect the determination result of the process in Step S103 in the flowchart of the export device 200 illustrated in Fig. 9. That is, in a case where the "Yes" button 431 is touched, the information for setting the setting value to the maximum value is stored as the setting menu information in the setting menu unit 204 of the export device 200. Therefore, the export data output from the export device 200 includes the script.

The export instruction screen 430 is a selection screen on which a command to export the setting value as 50 minutes and a command to export the setting value as the maximum value can be selected.

In addition, for example, in the first exemplary embodiment, after the start button 413 illustrated in Fig. 8 is touched, an export instruction screen 440 illustrated in Fig. 14 is displayed on the display screen (not illustrated) in order to export the use permission service. In Fig. 14, a message "Please select the selection criteria for the use permission service" is displayed on the export instruction screen 440. In addition, a configuration is adopted in which three selection criteria of "determination for each service", "input method criteria", and "output method criteria" are displayed and a check box 441 is displayed on the left side of each of the three selection criteria and is touched to select the selection criteria.

That is, in a case where the "determination for each service" is selected on the export instruction screen 440 illustrated in Fig. 14, the setting values are individually set. In a case where the "input method criteria" and the "output method criteria" are selected, the setting values are set for the purpose. That is, in a case where the "input method criteria" and the "output method criteria" are selected, for example, information indicating the setting for the purpose is stored as the setting menu information in the setting menu unit 204 of the export device 200.

That is, on the export instruction screen 440 illustrated in Fig. 14, the operation of checking the check box 441 is an operation that affects the determination result of the process in Step S103 in the flowchart of the export device 200 illustrated in Fig. 9. That is, in a case where the "input method criteria" and the "output method criteria" are selected, information indicating the setting for the purpose is stored as the setting menu information in the setting menu unit 204 of the export device 200. Therefore, the export data output from the export device 200 includes the script.

The export instruction screen 440 is a selection screen on which a command to export the setting values as the individual setting and a command to export the setting values as the setting for the purpose can be selected.

### <Operation and Effects>

In the information processing system according to the present exemplary embodiment, as described above, one command can be selected from a plurality of commands, and the selected command is included in the setting information, that is, the export data. Therefore, it is possible to transmit and receive the setting information in which the setting intention of a selector, such as the administrator of the device, has been reflected.

Further, in the information processing system according to the present exemplary embodiment, the export instruction screens 430 and 440 are displayed as the selection screens on which a plurality of commands can be selected. Therefore, it is possible to select a command on the selection screen.

### <Third Exemplary Embodiment>

Hereinafter, an information processing system and an information processing program according to a third exemplary embodiment of the present disclosure will be described with reference to the drawings. In the present exemplary embodiment, unlike the above-described exemplary embodiments, the setting menu information is acquired according to the device information of the export device 200. For example, as illustrated in the following Table 5, in the export device 200, the size and paper quality settings of each tray and the priority of the tray are stored as the setting information in the setting information storage unit 203. Specifically, A4 recycled paper is set in tray 1, and A4 plain paper is set in tray 2. The priority is set in the order of tray 1 and tray 2. On the other hand, as illustrated in the following Table 5, in the import device 300, A4 plain paper is set in tray 1, and A4 recycled paper is set in tray 2.

**[Table 5]**

| Setting information name | Export device | Import device |
|---|---|---|
| Tray 1 | A4 recycled paper | A4 plain paper |
| Tray 2 | A4 plain paper | A4 recycled paper |
| Priority | Tray 1 → Tray 2 | |

As described above, in the export device 200, assuming that the setting intention of the priority is to use the recycled paper first and then use the plain paper, in a case where the export data including the setting information is output to the import device 300 and reflected therein without any change, the priority set in the order of tray 1 and tray 2 is maintained in the import device 300. Therefore, the priority is set such that the plain paper is used first and then the recycled paper is used.

As described above, the settings may be unintentionally taken over in a case where the export process and the import process are performed between models having a difference in the usage situation of the device, such as the type of paper accommodated in the tray, a difference between products, and a difference in specifications, such as a change in the specifications of the identical product, as the device information.

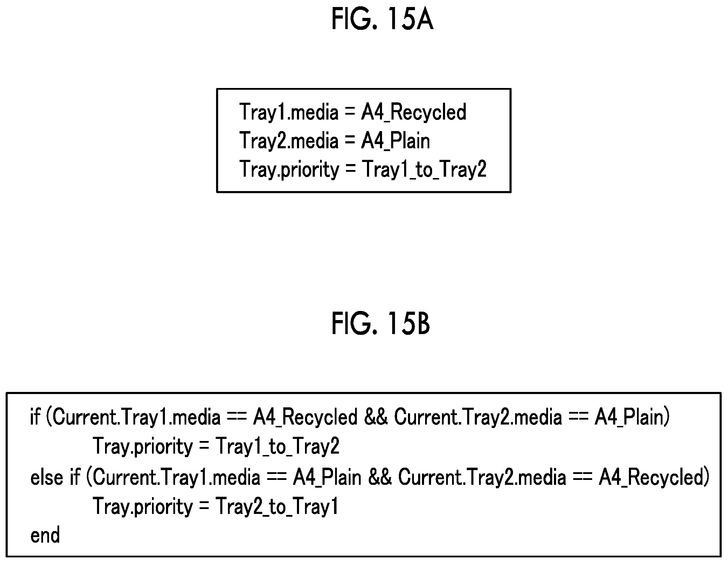

In the present exemplary embodiment, information indicating the setting intention of the priority, that is, information indicating that the recycled paper is used first and then the plain paper is used is stored as the setting menu information in the setting menu unit 204 similarly to the first exemplary embodiment. Fig. 15A is a diagram illustrating export data in a case where there is no setting menu information, and Fig. 15B is a diagram illustrating export data in a case where there is setting menu information.

In a case where information indicating the setting intention of the priority is not stored as the setting menu information in the setting menu unit 204, the contents of Table 5 are reflected in the export data as illustrated in Fig. 15A. That is, "Tray1.media=A4_Recycled" indicates that "tray1 is A4 recycled paper", and "Tray2.media=A4_Plain" indicates that "tray2 is A4 plain paper". In addition, "Tray.priority=Tray1_to_Tray2" indicates that "the priority is set in the order of tray 1 and tray 2".

On the other hand, as in the present exemplary embodiment, in a case where the information indicating the setting intention of the priority is stored as the setting menu information in the setting menu unit 204, the export data is "if(Current.Tray1.media==A4_Recycled&&Current.Tray2.media==A4_Plain)Tray.priority=Tr ay1_to_Tray2 else if(Current.Tray1.media==A4_Plain&&Current.Tray2.media==A4_Recycled)Tray.priority=Tra y2_to_Tray1 end" as illustrated in Fig. 15B. That is, the setting intention of the priority indicating "The priority is set in the order of tray 1 and tray 2 in a case where tray 1 is A4 recycled paper and tray 2 is A4 plain paper and is set in the order of tray 2 and tray 1 in a case where tray 1 is A4 plain paper and tray 2 is A4 recycled paper" is reflected in the export data.

### <Operation and Effects>

In the information processing system according to the present exemplary embodiment, in a case where the export device 200 receives the setting information output request from the PC 400, the export data including the script is generated according to the device information related to the export device 200. Therefore, it is possible to transmit and receive the setting information in which the setting intention corresponding to the device has been reflected.

In addition, in the information processing system according to the present exemplary embodiment, since the device information is the usage situation of the export device 200, it is possible to transmit and receive the setting information in which the settings corresponding to the usage situation of the device have been reflected.

### [Other Exemplary Embodiments]

The information processing system 100 according to an exemplary embodiment of the present disclosure has been described above. However, the technology of the present disclosure is not limited to the above-described exemplary embodiment and may be changed as appropriate.

In addition, in the above-described exemplary embodiments, the multifunction machine is used as an example of the device. However, the present disclosure is not limited thereto. For example, a printer or the like that executes only the printing process may be used, or an image forming device other than the multifunction machine may be used as an example of the device. In addition, an example of the terminal operated by the administrator of the information processing system 100 is not limited to the PC and may be a terminal, such as a smartphone, or any device that can communicate.

Further, in the above-described exemplary embodiments, the export device 200 generates the export data. However, the present disclosure is not limited thereto. For example, the PC 400 may generate the export data. The import devices 300, 310, and 320 may generate the export data.

Furthermore, in the above-described exemplary embodiments, the "script" is used as an example of the "command". However, the technology of the present disclosure is not limited to the "script", and any format may be used as long as the format can be interpreted by the import devices 300, 310, and 320.

In addition, in the third exemplary embodiment, the script is generated according to the usage situation of the paper and the tray of the export device 200. However, the technology of the present disclosure is not limited thereto. For example, the script may be generated according to a hardware configuration, such as an option mounting situation, of the export device 200. Alternatively, the script may be generated according to both the usage situation and the hardware configuration of the export device 200.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Further, a program for implementing the exemplary embodiments of the present invention can be provided not only by a communication means but also by being stored in a recording medium such as a CD-ROM.

The present disclosure is not limited to the above-described exemplary embodiments, and various modifications, changes, and improvements can be made without departing from the gist of the present disclosure. For example, two or more of the above-described modification examples may be configured to be combined with each other as appropriate.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

100: information processing system
110: local network
200: export device
201: communication unit
202: export control unit
203: setting information storage unit
204: setting menu unit
205: UI control unit
206: control bus
300: import device
301: communication unit
302: import control unit
303: setting information storage unit
306: control bus
310: import device
320: import device
400: PC
410: export instruction screen
411: check box
412: text box
413: start button
414: back button
420: import instruction screen
430: export instruction screen
431: "Yes" button
432: "No" button
440: export instruction screen
441: check box
500: menu
501: spin button
502: frame
503: OK button
504: Cancel button
510: menu
511: "Set maximum value" key
512: "Set minimum value" Key
513: Cancel button
514: "Select numerical value on next screen" key
520: menu
530: menu
531: check box
540: menu

## Claims

1. An information processing system (100) comprising:
at least one processor configured to:
include a command, in which a setting value is changed depending on a condition applied to a first device (200), in setting information that is input to a second (300) device different from the first device (200) in order to reflect settings of the first device (200) in the second device (300);
determining if setting menu information, the setting menu information comprising information expressing an intention for setting a setting value, is present (S103);
if the setting menu information is present, the command included in the setting information that is input to the second device is a command in which a setting value is changed based on the intention for setting a setting value (S105); and
causing the first device (200) to perform a process of outputting the setting information including the command to the second device (300).

2. The information processing system (100) according to claim 1, wherein the processor is configured to:
cause the first device (200) to read out an operation history related to the settings of the first device (200) and to generate the command on the basis of a content of the read-out operation history.

3. The information processing system (100) according to any one of claims 1 to 2, wherein the processor is configured to:
cause the second device (300) to perform a process of receiving the setting information including the command and to update settings of the second device (300) on the basis of the received setting information including the command.

4. The information processing system (100) according to any one of claims 1 to 3, wherein the processor is configured to:
make one command selectable from a plurality of commands and include the selected command in the setting information.

5. The information processing system (100) according to claim 4, wherein the processor is configured to:
display a selection screen (430) on which the plurality of commands are selectable.

6. The information processing system (100) according to any one of claims 1 to 5, wherein the processor is configured to:
in a case where a request to output the setting information of the first device (200) is received, generate the command according to device information related to the first device (200).

7. The information processing system (100) according to claim 6,
wherein the device information is at least one of a usage situation or a hardware configuration of the first device (200).

8. The information processing system (100) according to any one of claims 1 to 7,
wherein the command is a command indicating use permission of printing-out and external transmission, and
the setting value indicates whether or not the use permission is available.

9. The information processing system (100) according to any one of claims 1 to 8,
wherein the command is a command indicating a power consumption mode transition time, and
the setting value indicates a maximum value or a minimum value.

10. An information processing method comprising:
including a command, in which a setting value is changed depending on a condition applied to a first device (200), in setting information that is input to a second device (300) different from the first device (200) in order to reflect settings of the first device (200) in the second device (300);
determining if setting menu information, the setting menu information comprising information expressing an intention for setting a setting value, is present (S103);
if the setting menu information is present, the command included in the setting information that is input to the second device is a command in which a setting value is changed based on the intention for setting a setting value (S105); and
causing the first device (200) to perform a process of outputting the setting information including the command to the second device (300).

11. An information processing program comprising instructions which, when the program is executed by a computer, cause the computer to execute a process comprising:
including a command, in which a setting value is changed depending on a condition applied to a first device (200), in setting information that is input to a second device (300) different from the first device (200) in order to reflect settings of the first device (200) in the second device (300);
determining if setting menu information, the setting menu information comprising information expressing an intention for setting a setting value, is present (S103);
if the setting menu information is present, the command included in the setting information that is input to the second device is a command in which a setting value is changed based on the intention for setting a setting value (S105); and
causing the first device (200) to perform a process of outputting the setting information including the command to the second device (300).

## Patentansprüche

1. Informationsverarbeitungssystem (100), umfassend:
mindestens einen Prozessor, der so konfiguriert ist, dass er:
einen Befehl, bei dem ein Einstellwert in Abhängigkeit von einer Bedingung, die auf eine erste Vorrichtung (200) angewendet wird, geändert wird, in Einstellinformationen, die in eine zweite Vorrichtung (300), die sich von der ersten Vorrichtung (200) unterscheidet, eingegeben werden, enthält, um Einstellungen der ersten Vorrichtung (200) in der zweiten Vorrichtung (300) widerzuspiegeln;
bestimmt, ob Einstellmenüinformationen vorhanden sind (S103), wobei die Einstellmenüinformationen Informationen, die eine Absicht zum Einstellen eines Einstellwerts ausdrücken, umfassen;
wenn die Einstellmenüinformationen vorhanden sind, ist der Befehl, der in den Einstellinformationen, die in die zweite Vorrichtung eingegeben werden, enthalten ist, ein Befehl, bei dem ein Einstellwert auf der Grundlage der Absicht zum Einstellen eines Einstellwerts geändert wird (S105); und
die erste Vorrichtung (200) veranlasst, einen Prozess des Ausgebens der Einstellinformationen, die den Befehl enthalten, an die zweite Vorrichtung (300) durchzuführen.

2. Informationsverarbeitungssystem (100) nach Anspruch 1, wobei der Prozessor so konfiguriert ist, dass er:
die erste Vorrichtung (200) veranlasst, eine Betriebshistorie, die sich auf die Einstellungen der ersten Vorrichtung (200) bezieht, auszulesen und den Befehl auf der Grundlage eines Inhalts der ausgelesenen Betriebshistorie zu erzeugen.

3. Informationsverarbeitungssystem (100) nach einem der Ansprüche 1 bis 2, wobei der Prozessor so konfiguriert ist, dass er:
die zweite Vorrichtung (300) veranlasst, einen Prozess des Empfangens der Einstellinformationen, die den Befehl enthalten, durchzuführen und Einstellungen der zweiten Vorrichtung (300) auf der Grundlage der empfangenen Einstellinformationen, die den Befehl enthalten, zu aktualisieren.

4. Informationsverarbeitungssystem (100) nach einem der Ansprüche 1 bis 3, wobei der Prozessor so konfiguriert ist, dass er:
einen Befehl aus mehreren Befehlen auswählbar macht und den ausgewählten Befehl in den Einstellinformationen enthält.

5. Informationsverarbeitungssystem (100) nach Anspruch 4, wobei der Prozessor so konfiguriert ist, dass er:
einen Auswahlbildschirm (430) anzeigt, auf dem die mehreren Befehle auswählbar sind.

6. Informationsverarbeitungssystem (100) nach einem der Ansprüche 1 bis 5, wobei der Prozessor so konfiguriert ist, dass er:
in einem Fall, in dem eine Anforderung zum Ausgeben der Einstellinformationen der ersten Vorrichtung (200) empfangen wird, den Befehl gemäß Vorrichtungsinformationen, die sich auf die erste Vorrichtung (200) beziehen, erzeugt.

7. Informationsverarbeitungssystem (100) nach Anspruch 6,
wobei die Vorrichtungsinformationen mindestens eine von einer Verwendungssituation und einer Hardwarekonfiguration der ersten Vorrichtung (200) sind.

8. Informationsverarbeitungssystem (100) nach einem der Ansprüche 1 bis 7,
wobei der Befehl ein Befehl ist, der Verwendungsberechtigung des Ausdruckens und des externen Übertragens angibt, und
der Einstellwert angibt, ob die Verwendungsberechtigung verfügbar ist oder nicht.

9. Informationsverarbeitungssystem (100) nach einem der Ansprüche 1 bis 8,
wobei der Befehl ein Befehl ist, der eine Übergangszeit von Stromverbrauchsmodus angibt, und
der Einstellwert einen Maximalwert oder einen Minimalwert angibt.

10. Informationsverarbeitungsverfahren, umfassend:
Enthalten eines Befehls, bei dem ein Einstellwert in Abhängigkeit von einer Bedingung, die auf eine erste Vorrichtung (200) angewendet wird, geändert wird, in Einstellinformationen, die in eine zweite Vorrichtung (300), die sich von der ersten Vorrichtung (200) unterscheidet, eingegeben werden, um Einstellungen der ersten Vorrichtung (200) in der zweiten Vorrichtung (300) widerzuspiegeln;
Bestimmen, ob Einstellmenüinformationen, wobei die Einstellmenüinformationen Informationen, die eine Absicht zum Einstellen eines Einstellwerts ausdrücken, umfassen, vorhanden sind (S103);
wenn die Einstellmenüinformationen vorhanden sind, ist der Befehl, der in den Einstellinformationen, die in die zweite Vorrichtung eingegeben werden, enthalten ist, ein Befehl, bei dem ein Einstellwert auf der Grundlage der Absicht zum Einstellen eines Einstellwerts geändert wird (S105); und
Veranlassen der ersten Vorrichtung (200), einen Prozess des Ausgebens der Einstellinformationen, die den Befehl enthalten, an die zweite Vorrichtung (300) durchzuführen.

11. Informationsverarbeitungsprogramm, umfassend Anweisungen, die, wenn das Programm von einem Computer ausgeführt wird, den Computer veranlassen, einen Prozess auszuführen, der umfasst:
Enthalten eines Befehls, bei dem ein Einstellwert in Abhängigkeit von einer Bedingung, die auf eine erste Vorrichtung (200) angewendet wird, geändert wird, in Einstellinformationen, die in eine zweite Vorrichtung (300), die sich von der ersten Vorrichtung (200) unterscheidet, eingegeben werden, um Einstellungen der ersten Vorrichtung (200) in der zweiten Vorrichtung (300) widerzuspiegeln;
Bestimmen, ob Einstellmenüinformationen, wobei die Einstellmenüinformationen Informationen, die eine Absicht zum Einstellen eines Einstellwerts ausdrücken, umfassen, vorhanden sind (S103);
wenn die Einstellmenüinformationen vorhanden sind, ist der Befehl, der in den Einstellinformationen, die in die zweite Vorrichtung eingegeben werden, enthalten ist, ein Befehl, bei dem ein Einstellwert auf der Grundlage der Absicht zum Einstellen eines Einstellwerts geändert wird (S105); und
Veranlassen der ersten Vorrichtung (200), einen Prozess des Ausgebens der Einstellinformationen, die den Befehl enthalten, an die zweite Vorrichtung (300) durchzuführen.

## Revendications

1. Système de traitement d'informations (100) comprenant :
au moins un processeur configuré pour :
inclure une commande, dans laquelle une valeur de réglage est modifiée en fonction d'une condition appliquée à un premier dispositif (200), dans des informations de réglage qui sont entrées dans un deuxième dispositif (300) différent du premier dispositif (200) afin de refléter des réglages du premier dispositif (200) dans le deuxième dispositif (300) ;
déterminer si des informations de menu de réglage, les informations de menu de réglage comprenant des informations exprimant une intention de réglage d'une valeur de réglage, sont présentes (S103) ;
si les informations de menu de réglage sont présentes, la commande incluse dans les informations de réglage qui sont entrées dans le deuxième dispositif est une commande dans laquelle une valeur de réglage est modifiée sur la base de l'intention de réglage d'une valeur de réglage (S105) ; et
amener le premier dispositif (200) à effectuer un processus de sortie des informations de réglage incluant la commande vers le deuxième dispositif (300).

2. Système de traitement d'informations (100) selon la revendication 1, dans lequel le processeur est configuré pour :
amener le premier dispositif (200) à lire un historique d'opérations lié aux réglages du premier dispositif (200) et à générer la commande sur la base d'un contenu de l'historique d'opérations lu.

3. Système de traitement d'informations (100) selon l'une quelconque des revendications 1 à 2, dans lequel le processeur est configuré pour :
amener le deuxième dispositif (300) à effectuer un processus de réception des informations de réglage incluant la commande et à mettre à jour des réglages du deuxième dispositif (300) sur la base des informations de réglage reçues incluant la commande.

4. Système de traitement d'informations (100) selon l'une quelconque des revendications 1 à 3, dans lequel le processeur est configuré pour :
rendre une commande sélectionnable parmi une pluralité de commandes et inclure la commande sélectionnée dans les informations de réglage.

5. Système de traitement d'informations (100) selon la revendication 4, dans lequel le processeur est configuré pour :
afficher un écran de sélection (430) sur lequel la pluralité de commandes sont sélectionnables.

6. Système de traitement d'informations (100) selon l'une quelconque des revendications 1 à 5, dans lequel le processeur est configuré pour :
dans un cas où une demande de sortie des informations de réglage du premier dispositif (200) est reçue, générer la commande en fonction d'informations de dispositif relatives au premier dispositif (200).

7. Système de traitement d'informations (100) selon la revendication 6,
dans lequel les informations de dispositif sont au moins l'une d'une situation d'utilisation ou d'une configuration matérielle du premier dispositif (200).

8. Système de traitement d'informations (100) selon l'une quelconque des revendications 1 à 7,
dans lequel la commande est une commande indiquant une autorisation d'utilisation pour l'impression et la transmission externe, et
la valeur de réglage indique si l'autorisation d'utilisation est disponible ou non.

9. Système de traitement d'informations (100) selon l'une quelconque des revendications 1 à 8,
dans lequel la commande est une commande indiquant un temps de transition de mode de consommation d'énergie, et
la valeur de réglage indique une valeur maximale ou une valeur minimale.

10. Procédé de traitement d'informations comprenant :
inclure une commande, dans laquelle une valeur de réglage est modifiée en fonction d'une condition appliquée à un premier dispositif (200), dans des informations de réglage qui sont entrées dans un deuxième dispositif (300) différent du premier dispositif (200) afin de refléter des réglages du premier dispositif (200) dans le deuxième dispositif (300) ;
déterminer si des informations de menu de réglage, les informations de menu de réglage comprenant des informations exprimant une intention de réglage d'une valeur de réglage, sont présentes (S103) ;
si les informations de menu de réglage sont présentes, la commande incluse dans les informations de réglage qui sont entrées dans le deuxième dispositif est une commande dans laquelle une valeur de réglage est modifiée sur la base de l'intention de réglage d'une valeur de réglage (S105) ; et
amener le premier dispositif (200) à effectuer un processus de sortie des informations de réglage incluant la commande vers le deuxième dispositif (300).

11. Programme de traitement d'informations comprenant des instructions qui, lorsque le programme est exécuté par un ordinateur, amènent l'ordinateur à exécuter un processus comprenant :
inclure une commande, dans laquelle une valeur de réglage est modifiée en fonction d'une condition appliquée à un premier dispositif (200), dans des informations de réglage qui sont entrées dans un deuxième dispositif (300) différent du premier dispositif (200) afin de refléter des réglages du premier dispositif (200) dans le deuxième dispositif (300) ;
déterminer si des informations de menu de réglage, les informations de menu de réglage comprenant des informations exprimant une intention de réglage d'une valeur de réglage, sont présentes (S103) ;
si les informations de menu de réglage sont présentes, la commande incluse dans les informations de réglage qui sont entrées dans le deuxième dispositif est une commande dans laquelle une valeur de réglage est modifiée sur la base de l'intention de réglage d'une valeur de réglage (S105) ; et
amener le premier dispositif (200) à effectuer un processus de sortie des informations de réglage incluant la commande vers le deuxième dispositif (300).
